# FASCICULE DE BREVET EUROPEEN

(11) **EP 2 737 229 B1**
(45) Date de publication et mention de la délivrance du brevet: **29.08.2018**
(21) Numéro de dépôt: 12744108.7
(22) Date de dépôt: 25.07.2012
(51) Int. Cl.: F16G 11/00, F16G 11/02, B63B 21/08, B63H 9/10

(54) **DISPOSITIF DE BLOCAGE ET DE DEBLOCAGE D'UN ELEMENT TUBULAIRE LONGILIGNE**
VORRICHTUNG ZUM VERRIEGELN UND ENTRIEGELN EINES LÄNGLICHEN ROHRFÖRMIGEN ELEMENTS
DEVICE FOR LOCKING AND UNLOCKING AN ELONGATE TUBULAR ELEMENT

(30) Priorité: 29.07.2011 FR 1156973
(43) Date de publication de la demande: 04.06.2014
(73) Titulaire: Cousin Trestec, 59117 Wervicq Sud (FR)
(72) Inventeur: PROUVOST, Stéphane, 59510 Hem (FR); LE GALL, Tanguy, 59170 Croix (FR); DALLE, Valery, 59170 Croix (FR); BARNET, Julien, 29900 Concarneau (FR)
(74) Mandataire: Balesta, Pierre
(86) Numéro de dépôt international: PCT/FR2012/051765
(87) Numéro de publication internationale: WO 2012/172272

(56) Documents cités:
- WO-A1-91/02179
- DE-A1- 4 442 840
- JP-A- 60 014 632
- US-A- 2 936 625
- US-A- 4 055 875
- US-A- 5 655 269

## Description

La présente invention concerne le domaine technique des dispositifs de blocage et de déblocage d'un élément tubulaire longiligne, en particulier dans le domaine du nautisme.

Les dispositifs de blocage et de déblocage selon l'invention sont communément désignés sous les termes de bloqueur ou coinceur dans le domaine de l'accastillage.

Pour hisser et régler les voiles d'un voilier, il est nécessaire d'utiliser différents bouts ou cordages qui doivent, selon la manoeuvre, mollir (choquer) ou mettre en tension (border) la ou lesdites voiles auxquelle(s) ils sont reliés. Au-delà d'une certaine vitesse de vent et également en fonction de la surface des voiles, la force à exercer sur les cordages nécessite de recourir à une assistance mécanique via notamment des dispositifs de blocage et de déblocage desdits cordages. En effet, des tensions de plusieurs centaines de kilogrammes, pouvant aller jusqu'à deux tonnes selon la taille du voilier et les conditions météorologiques, sont exercées sur les cordages.

Les dispositifs de blocage et de déblocage d'éléments tubulaires longilignes, tels que des cordages, sont habituellement des dispositifs mécaniques comprenant une pièce principale rigide ou semi-rigide, usinées ou moulées. Ces pièces principales comprenant une portion intérieure creuse, de préférence cylindrique, et traversante, dans laquelle passe le cordage à bloquer et débloquer. Ces dispositifs comprennent en outre des moyens mécaniques actionnables manuellement pour le blocage et le déblocage du cordage dans ladite portion creuse, ces moyens peuvent être un levier, un système de ressort ou encore des parties crantées qui viennent dans tous les cas écraser le cordage sur une portion de sa longueur pour le bloquer. Ladite portion écrasée passe ainsi d'une section transversale sensiblement circulaire à une section transversale ovale et aplatie.

De tels dispositifs présentent de nombreux inconvénients. La corde étant bloquée par écrasement, elle a parfois tendance à glisser dans ladite portion intérieure et dès lors à modifier le réglage des voiles. De plus, la corde étant écrasée et dans des conditions d'usure difficiles (eau salée, soleil,...etc), cet écrasement mécanique accélère sa dégradation mécanique et chimique.

Ces dispositifs mécaniques ne sont pas adaptés à des cordes qui sont de simples tresses, car ces dernières glissent et ne peuvent être bloquées de façon fiable. Il est ainsi nécessaire de prévoir une sur-gaine tressée ou une couverture pour améliorer le comportement de la corde et permettre ainsi son blocage fiable.

Quand bien même, des sur-gaines ou des couvertures sont prévues sur les cordages, certains matériaux hautes performances, tel que par exemple le polyéthylène à très haut poids moléculaire (commercialisé par exemple sous la marque Dyneema®), lorsqu'ils sont disposés sur l'extérieur de la corde rendent impossible leur blocage efficace car les cordes glissent dans ces dispositifs mécaniques du fait du très faible coefficient de friction desdits matériaux.

Ces dispositifs mécaniques sont limités individuellement à un diamètre externe de corde bien précis puisqu'il est nécessaire de former un couple diamètre externe de corde à bloquer et diamètre interne de la portion intérieure creuse parfaitement adapté pour obtenir un blocage efficace.

Lors du déblocage de ces dispositifs mécaniques, la tension est souvent relâchée de façon brusque de sorte qu'il est nécessaire de remettre les cordages en tension. Pour pallier à cet inconvénient, une portion libre du cordage est montée au préalable sur un winch permettant lors du déblocage du cordage de le remettre en tension au fur et à mesure de sa libération.

On connaît le document WO 91/02179 divulguant un dispositif de blocage comprenant un boitier duquel se projette un bras d'actionnement couplé à une gaine de blocage recevant dans son volume intérieur un élément longiligne à bloquer. Par l'intermédiaire du bras d'actionnement, l'utilisateur fait varier la compression exercée par la gaine de blocage sur ledit élément en rapprochant ou en éloignant deux portions de la gaine de blocage. Ce dispositif est destiné en particulier à être fixé sur le pont d'un bateau. Le boitier est volumineux, complexe de fabrication et offre peu de possibilité pour améliorer la résistance au glissement conférée par la gaine de blocage. En effet, l'augmentation de la ténacité et du titrage des fils utilisés dans la gaine de blocage est limitée par le volume intérieur disponible. En outre, la gaine de blocage est fabriquée à partir de fils métalliques qui, en fonctionnement, vont abraser la surface de l'élément longiligne, en particulier dans le domaine du nautisme dans lequel plus de la moitié des cordages vendus sont réalisés à partir de fils multifilamentaires en polyéthylène téréphtalate.

Le document US 4.055.875 présente les mêmes inconvénients que ceux cités précédemment du fait de la présence d'un boitier ayant un volume intérieur limité. En outre, les moyens de blocage de l'élément longiligne ne sont pas formés comme dans le document précédent d'une gaine de blocage tressée mais formés d'un ou plusieurs câbles guipés autour de l'élément longiligne à bloquer. On comprend bien que la résistance au glissement offerte est faible, le dispositif de blocage étant d'ailleurs adapté pour le domaine de l'escalade, i.e pour résister au maximum à quelques centaines de kilogrammes.

Il existe ainsi un besoin, en particulier dans le domaine du nautisme, pour un dispositif de blocage et de déblocage, peu volumineux, facile à régler et à mettre en oeuvre, peu onéreux et permettant d'atteindre des résistances de blocage (également appelée dans la suite du présent texte résistance au glissement) importantes.

La présente invention pallie tout ou partie des problèmes précités en ce qu'elle a pour objet un dispositif de blocage et de déblocage d'un élément tubulaire longiligne adapté pour le domaine du nautisme comprenant:
a. Une gaine de blocage, tubulaire, ayant un volume intérieur et des première et seconde extrémités, tressée ou tricotée, comportant un orifice d'admission dans son volume intérieur pour l'admission dudit élément tubulaire longiligne et un orifice de sortie de son volume intérieur pour la sortie dudit élément tubulaire longiligne ;
b. Des moyens de fixation de ladite gaine de blocage sur un support ;
c. Des moyens de mise en tension de ladite gaine de blocage selon une trajectoire sensiblement rectiligne (L) permettant le blocage dudit élément tubulaire longiligne dans le volume intérieur de ladite gaine de blocage entre lesdits orifices d'admission et de sortie, lesdits moyens de mise en tension étant désactivables manuellement pour le déblocage dudit élément tubulaire longiligne permettant son coulissement dans le volume intérieur de la gaine de blocage et à travers lesdits orifices d'admission et de sortie, et/ou avec l'aide de moyens de désactivation.
La distance séparant les orifices d'admission et de sortie de ladite gaine de blocage est supérieure ou égale à quinze fois le diamètre externe dudit élément longiligne à bloquer.

On comprend par élément longiligne tubulaire, tout élément ayant une longueur supérieure à celle de sa largeur, et en particulier tout élément longiligne tubulaire comprenant un cordage tressé ou tricoté, éventuellement comprenant également une couverture tressée ou tricotée ou dans un matériau polymère, par exemple une couverture extrudée sur ledit cordage. De préférence, la surface extérieure de l'élément longiligne est en reliefs, notamment la surface extérieure dudit élément longiligne comprend des fils monofilamentaires et/ou des fils multifilamentaires entrelacés, en particulier tressés ou tricotés. De préférence, l'élément tubulaire longiligne est suffisamment souple en sorte qu'il puisse faire un noeud sur lui-même.

Avantageusement, la structure tricotée ou tressée de la gaine de blocage lui confère une certaine élasticité grâce au déplacement des fils entrelacés les uns par rapport aux autres selon la direction longitudinale (l) de ladite gaine de blocage. Lorsque la gaine de blocage est mise en tension selon une trajectoire sensiblement rectiligne (L), les fils tricotés ou tressés débouchant dans le volume intérieur créent une surface intérieure en reliefs apte à entrer en friction avec la surface extérieure de l'élément longiligne tubulaire bloquant ainsi son coulissement dans le volume intérieur de ladite gaine de blocage entre ses orifices d'admission et de sortie.

De plus, la distance séparant les orifices d'admission et de sortie est importante comparativement à des systèmes de blocage du type doigtier japonais mais permet d'assurer un blocage d'éléments longilignes sur lesquels des forces de plus de 500 daN, 1000 daN, voire 4500 daN (par exemple pour un élément longiligne ayant un diamètre de 14 mm), sont appliqués sans recourir à un boitier externe volumineux et donc encombrant en particulier sur le pont d'un bateau. En outre, la distance entre les orifices d'admission et de sortie est facilement réglable à partir d'une gaine de blocage comparativement à un boitier à came ou un boitier comprenant une portion de gaine de blocage courte dans son volume intérieur.

De manière surprenante, la gaine de blocage selon l'invention permet d'atteindre des résistances au glissement importantes pour un diamètre externe de l'ordre de 10 mm seulement, et permet ainsi de fournir un dispositif de blocage peu encombrant, fiable, et durable.

Une explication non exhaustive est que cette disposition permet d'obtenir une interface de frottements suffisante entre la gaine de blocage et l'élément longiligne, en particulier pour des éléments longilignes utilisés dans le domaine du nautisme. Néanmoins, l'influence de ce paramètre en particulier sur la résistance au glissement apportée par la gaine de blocage comparativement à la ténacité des fils, le nombre de fils ou encore le titrage des fils est de manière surprenante très importante.

En fonctionnement, lorsque l'on souhaite désactiver les moyens de mise en tension, il suffit d'exercer une tension, désignée également ci-après sous le terme de contre-tension, sur la gaine de blocage en périphérie de l'orifice de sortie, notamment en aval de l'orifice de sortie, dans une direction opposée à la tension faisant adopter à ladite gaine de blocage une trajectoire rectiligne.

Si l'élément tubulaire longiligne était au préalable déjà mis en tension, le déblocage des moyens de mise en tension entraîne son coulissement libre à travers la gaine de blocage jusqu'à ce que ledit élément tubulaire longiligne ne soit plus tendu ou que l'opérateur bloque le coulissement dudit élément longiligne tubulaire par la réactivation desdits moyens de mise en tension. Il est ainsi très facile de réactionner lesdits moyens de mise en tension en faisant adopter à ladite gaine de blocage une trajectoire rectiligne (L) et en supprimant la contre-tension exercée sur cette dernière par les moyens de désactivation. De plus, la gaine de blocage fait office de moyen de guidage et de freinage lors du coulissement de l'élément tubulaire longiligne ce qui facilite le réglage de sa longueur et empêche un coulissement brutal dudit élément tel qu'on l'observe pour les dispositifs de l'état de la technique.

Si l'élément tubulaire longiligne n'était pas au préalable mis en tension, il reste alors à exercer une traction sur l'élément tubulaire longiligne pour ajuster sa longueur et donc ajuster le réglage de la ou des voiles auxquelles ledit élément est relié. Le déblocage dudit élément longiligne n'entraîne pas ainsi son coulissement sans que l'opérateur n'exercer encore une traction sur ledit élément longiligne. Avantageusement, la gaine de blocage fait office, dans ce cas également, de moyen de guidage et de moyen de freinage permettant le coulissement contrôlé de l'élément tubulaire dans le volume intérieur de la gaine de blocage.

L'amont de l'orifice de sortie est défini comme étant une portion de la gaine de blocage disposée entre l'orifice d'admission et l'orifice de sortie, et l'aval de l'orifice de sortie est définie par opposition à l'amont de l'orifice de sortie, en particulier lorsque l'orifice de sortie et la seconde extrémité sont différentes, l'aval de l'orifice de sortie est alors définie comme étant une portion de la gaine de blocage disposée entre l'orifice de sortie et sa seconde extrémité.

Avantageusement, la structure textile de la gaine de blocage lui conférant une certaine souplesse, la gaine de blocage peut être utilisée pour des éléments longilignes de différents diamètres externes, ou à tout le moins pour des éléments longilignes ayant un diamètre externe égale au diamètre interne de la gaine de blocage ou inférieur jusqu'à 20 % au diamètre interne de ladite gaine de blocage.

Avantageusement, l'élément longiligne n'est pas écrasé lors de son blocage dans la gaine de blocage de sorte que la résistance mécanique et la résistance chimique de l'élément longiligne sont améliorées.

Quelle que soit la nature du ou des matériaux disposé(s) sur la surface extérieure de l'élément longiligne, le frottement entre la surface intérieure de la gaine de blocage et la surface extérieure dudit élément longiligne ainsi que les frottements au niveau des orifices d'admission et de sortie avec ledit élément longiligne, sont suffisants pour bloquer ledit élément longiligne.

Enfin, le dispositif de blocage et de déblocage selon l'invention est plus léger que les dispositifs mécaniques de l'état de la technique.

La gaine de blocage selon l'invention est tressée ou tricotée à partir de fils monofilamentaires et/ou de fils multifilamentaires synthétiques en sorte de former une surface intérieure, débouchant dans son volume intérieure, en reliefs apte à exercer des frottements sur la surface extérieure de l'élément longiligne lors du coulissement de ce dernier dans le volume intérieur de la gaine de blocage. Afin que les fils tricotés ou tressés entrant dans la fabrication de la gaine de blocage soient libres et puissent se déplacer les uns par rapport aux autres, il est ainsi préférable que la gaine de blocage ne comprenne pas de revêtement intérieur ou extérieur solidarisé à sa surface intérieure ou extérieure, tel que par exemple un revêtement polymère sous forme d'un film.

Dans le domaine du nautisme, la gaine de blocage a un diamètre externe supérieur ou égal à 3 mm, de préférence supérieur ou égal à 6 mm.

A titre d'exemple, la gaine de blocage présente les diamètres externes suivants : 6 mm, 8 mm, 10 mm, 12 mm ou 14 mm.

Le support sur lequel la gaine de blocage peut être fixée via lesdits moyens de fixation peut être par exemple le pont d'un voilier ou tout autre support, par exemple dans le domaine du sport ou de la sécurité, en particulier dans le domaine de l'escalade, le support peut être un baudrier (dispositif fixé sur la taille) ou un harnais (dispositif fixé sur la taille et la poitrine).

Le dispositif selon l'invention est utilisé de préférence dans le domaine du nautisme, mais il peut être utilisé également dans le domaine de la sécurité, de l'escalade ou dans différentes applications industrielles nécessitant le blocage et le déblocage facile et rapide d'un élément longiligne tubulaire souple.

Dans une variante, la distance séparant les orifices d'admission et de sortie de la gaine de blocage est supérieure ou égale à vingt fois, de préférence supérieure ou égale à trente fois, encore de préférence supérieure ou égale à quarante fois, le diamètre externe dudit élément longiligne à bloquer.

Dans une variante, la gaine de blocage comporte des première et seconde extrémités ouvertes, de préférence la première extrémité ouverte correspond audit orifice d'admission, éventuellement la seconde extrémité ouverte correspond audit orifice de sortie.

Lorsque les première et seconde extrémités de la gaine de blocage sont ouvertes et correspondent aux orifices d'admission et de sortie, les frottements entre les orifices d'admission et de sortie et l'élément longiligne sont limités ce qui préserve ainsi la durée de vie de la gaine de blocage et facilite le coulissement de l'élément longiligne dans la gaine de blocage, en position débloquée, puisque l'élément longiligne adopte une direction qui est confondue avec l'axe longitudinale (l) de ladite gaine de blocage.

Dans une variante, l'orifice de sortie débouche transversalement de la gaine de blocage.

Les frottements entre l'orifice de sortie et l'élément longiligne sont alors plus accrus que si l'orifice de sortie était confondu avec la seconde extrémité ouverte de la gaine de blocage.

Dans une variante, la gaine de blocage comprend des fils multifilamentaires, de préférence choisi parmi les matériaux suivants seul ou en combinaison : polytétrafluoroéthylène (PTFE), polybenzobisoxazole (PBO), aramide : méta-aramide et/ou para-aramide, et éventuellement polyamide 6-6 ou 4-6, polyéthylène à très haut poids moléculaire, polypropylène (PP), polyéthylène téréphtalate (PET), polyetheretherketone (PEEK), polyetherketone ketone (PEK), de préférence choisi seul ou en combinaison parmi le polybenzobisoxazole (PBO) et l'aramide : méta-aramide et/ou para-aramide.

Le demandeur s'est aperçu que lorsque des tensions de plusieurs centaines de kilogrammes, voire plusieurs tonnes sont appliquées sur l'élément longiligne lors de son coulissement dans la gaine de blocage, certains matériaux, notamment s'agissant de fils multifilamentaires en polyéthylène téréphtalate, avaient tendance à fondre partiellement au niveau des orifices d'admission et de sortie. Il est ainsi préféré, lorsqu'au moins des tensions de plusieurs centaines de kilogrammes sont appliquées sur l'élément longiligne lors de son coulissement, d'utiliser des fils résistants à l'abrasion, en particulier des fils résistants à des températures élevées, ayant notamment des températures de fusion supérieures ou égales à 250°C.

Le demandeur s'est également aperçu que la fonction de blocage est nettement améliorée lorsque des fils multifilamentaires sont employés dans la fabrication de la gaine de blocage et forment sa surface intérieure.

Une explication, non exhaustive, serait que le coefficient de friction de la surface intérieure est ainsi plus élevé que si cette dernière avait été formée de fils monofilaments.

Dans une variante, les moyens de mise en tension comprennent un ressors monté sur la gaine de blocage, ledit ressort ayant une rigidité déterminée en sorte de conférer à ladite gaine de blocage une trajectoire sensiblement rectiligne (L).

Cette disposition minimise l'encombrement des moyens de mise en tension, et évite l'emploi d'un câble supplémentaire sur le pont d'un bateau.

Dans une variante, les moyens de mise en tension comprennent un câble de mise en tension élastique apte à être solidarisé sur ledit support et solidarisé à la seconde extrémité de la gaine de blocage, de préférence la seconde extrémité de la gaine de blocage comporte une épissure formant une boucle d'attache dans laquelle est solidarisée ledit câble de mise en tension.

On comprend par épissure dans le présent texte toute boucle formée à l'extrémité d'un câble par épissage.

Dans ce cas, la première extrémité de la gaine de blocage est soit ouverte et fait office d'orifice d'admission, soit fermée (comporte éventuellement une épissure) ou ouverte et indépendante de l'orifice d'admission. Dans ce dernier cas, la première extrémité de la gaine de blocage est de préférence utilisée en tant que portion d'attache via les moyens de fixation pour la fixation de la gaine de blocage sur le support, par exemple le pont d'un bateau.

Le câble élastique présente ainsi une première extrémité apte à être solidarisée sur le support, notamment via des moyens d'attache connus de l'état de la technique, par exemple du type vis et écrous, et une seconde extrémité, de préférence comportant une épissure, solidarisée à la seconde extrémité de la gaine de blocage, de préférence la seconde extrémité de la gaine de blocage comporte une épissure dans laquelle peut être attachée l'épissure de la seconde extrémité du câble élastique.

Dans une variante, les moyens de mise en tension comprennent un jonc de renfort composite, apte à être courbé, ayant des première et seconde extrémités solidarisées respectivement aux première et seconde extrémités de la gaine de blocage.

Le jonc de renfort composite comprend une âme textile, par exemple à base de fils multifilamentaires en verre, et une matrice composite, par exemple à base d'époxy, de vinyl-ester ou encore en polyuréthane.

Dans une variante, les moyens de mise en tension comprennent au moins trois fils monofilamentaires, de préférence ayant un diamètre externe supérieur ou égal à 0,2 mm, disposés dans la structure tressée de la gaine de blocage.

Avantageusement, les moyens de mise en tension sont incorporés directement dans la structure de la gaine de blocage ce qui réduit l'encombrement de la gaine de blocage et simplifie l'utilisation du dispositif. Les monofilaments rigidifient ainsi la gaine de blocage, lui confèrent une trajectoire rectiligne et un bon retour élastique.

Dans une variante, les fils monofilamentaires sont disposés dans la structure de la gaine de blocage en sorte d'être équidistants, parallèles entre-eux et à la direction longitudinale (l) de ladite gaine.

Dans une variante, les fils monofilamentaires sont choisis parmi les polymères suivants, seul ou en combinaison : polyéther éther kétone (PEEK) polyetherketone ketone (PEK), copolymère à bloc polyéther-ester, copolymère à bloc polyéther-amide (PEBA), polyéthylènetéréphtalate (PET), polyamide 6-6, 4-6, polyacétals, notamment le polyoxyméthylène (POM).

Ces matériaux polymères sont résistants à l'abrasion même dans des conditions d'échauffement importantes, et confèrent rigidité et retour élastique à la gaine de blocage.

Dans une variante, les moyens de mise en tension exercent une tension au moins de 1,5 Kg, de préférence au moins de 2 Kg, sur la gaine de blocage.

Les inventeurs ont déterminé que la mise en tension ne devaient pas juste suffire à conférer une trajectoire rectiligne à la gaine de blocage mais que la tension exercée impacte de manière très significative la résistance au glissement conférée par la gaine de blocage.

Dans une variante, la gaine de blocage comprend des fils multifilamentaires tressés selon le mode un pris pour un ou deux laissé(s) en sorte de former des faces interne et externe en reliefs.

On comprend par le mode un pris pour un laissé ou deux laissés, le fait que les fils multifilamentaires ne sont chevauchés ou ne chevauchent qu'un seul fil ou deux fils au plus selon le plus petit motif de répétition du mode d'entrelacement retenu.

Cette disposition est analogue aux armures de tissage, correspondant ici à une armure toile ou sergé 1/2. A l'opposé une armure du type sergé 1/3 ou plus prévoit un mode d'entrelacement d'un pris pour trois laissés ou plus générant ainsi des flottés de fils importants.

Dans le cadre de la présente invention, ces flottés ne sont pas recherchés car ils génèrent des surfaces plus homogènes et donc moins en reliefs.

Le mode de liaison un pris pour un laissé ou deux laissés, également qualifié par l'homme du métier de « câble perlé », permet de conférer des faces interne et externe à la gaine de blocage en reliefs améliorant ainsi la résistance au glissement ou au blocage.

Dans une variante, les moyens de désactivation comprennent un câble de tirage ayant des première et seconde extrémités, la seconde extrémité dudit câble de tirage est solidarisée en périphérie de l'orifice de sortie à la gaine de blocage (par exemple à l'aide d'une épissure formée à ladite seconde extrémité du câble de tirage et passant à travers des fils disposés en périphérie dudit orifice de sortie), de préférence en aval de l'orifice de sortie, en sorte que par l'application d'une traction, notamment manuelle, sur une portion dudit câble de tirage vers ledit orifice d'admission, les orifices de sortie et d'admission sont rapprochés permettant le déblocage de l'élément tubulaire longiligne et son coulissement à travers lesdits orifices d'admission et de sortie lorsqu'une traction est exercée sur ledit élément tubulaire longiligne.

La première extrémité du câble de tirage est libre et préhensible par un opérateur.

Dans une variante, les moyens de fixation de la gaine de blocage sur un support comprennent une base sur laquelle est solidarisée une première pièce cylindrique creuse ayant un diamètre interne (D), et une seconde pièce creuse mobile de forme tronconique ayant une pente (alpha) inférieure à 10°, de préférence inférieure à 5°, et ayant son plus grand diamètre externe (d) inférieur au diamètre interne de ladite première pièce. Lesdites première et seconde pièces étant agencées en sorte que la gaine de blocage est apte à passer à l'intérieur de ladite première pièce et à gainer ladite seconde pièce, et en sorte que l'emboîtement de la seconde pièce, gainée par ladite gaine de blocage, dans ladite première pièce permette la solidarisation de ladite gaine de blocage à ladite base.

Ladite base est fixée au support via des moyens de fixation connus, du type vis et écrous, ou encore par collage, s'agissant notamment du pont d'un bateau.

Si le support est un baudrier ou un harnais, ladite base peut comprendre au moins une ouverture, de préférence deux ouvertures disposées de part et d'autre de la première pièce, dans lesquelles des passants, notamment en textile, peuvent être insérés et cousus sur le support.

Dans une variante, l'orifice d'admission débouche transversalement de la gaine de blocage, éventuellement la seconde extrémité de la gaine de blocage est ouverte et correspond à l'orifice de sortie, et en ce que les moyens de fixation comprennent une plaque comportant des moyens d'attache de la première extrémité de la gaine de blocage, et des moyens de guidage dudit élément tubulaire longiligne, notamment un anneau monté sur ladite plaque.

Dans une variante, le dispositif selon l'invention comprend un élément longiligne à bloquer, dont la surface externe comprend des fils multifilamentaires tressés selon un mode un pris et un ou deux laissés.

La définition du mode de liaison un pris et un ou deux laissés a été décrite ci-dessus en référence à la gaine de blocage.

Cette disposition améliore la résistance au glissement de l'élément longiligne dans la gaine de blocage.

La présente invention sera mieux comprise à la lecture de trois exemples de réalisation de dispositifs de blocage et de déblocage selon l'invention cités à titre non limitatif, et illustrés par les figures suivantes, annexées à la présente et dans lesquelles :
- La figure 1 est une représentation schématique et en perspective d'un premier exemple de réalisation de dispositif de blocage et de déblocage selon l'invention ;
- La figure 2 est une représentation schématique et en perspective des moyens de fixation de la gaine de blocage représentés à la figure 1 ;
- La figure 3 est une représentation schématique et en perspective d'un second exemple de réalisation de dispositif de blocage et de déblocage selon l'invention ;
- La figure 4 est une représentation schématique et en perspective d'un troisième exemple de réalisation de dispositif de blocage et de déblocage selon l'invention.

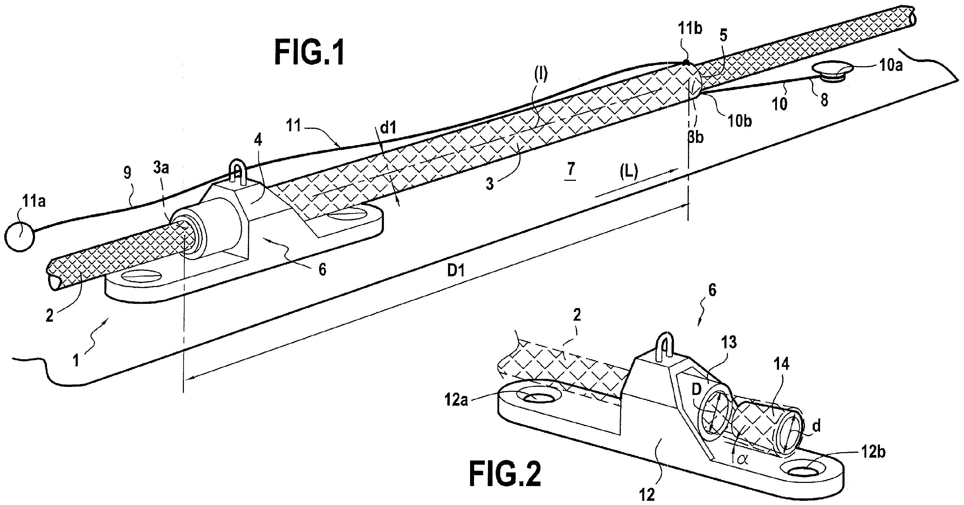

Le dispositif de blocage et de déblocage 1, représenté à la figure 1, d'un élément tubulaire longiligne 2, comprend une gaine de blocage 3, tubulaire, ayant un volume intérieur et des première 3a et seconde 3b extrémités, tressées ou tricotées, comportant un orifice d'admission 4 dans son volume intérieur pour l'admission dudit élément tubulaire longiligne 2 et un orifice de sortie 5 de son volume intérieur pour la sortie dudit élément tubulaire longiligne 2.

Le dispositif 1 comprend en outre des moyens de fixation 6 de la gaine de blocage 3 sur le support 7, tel que le pont d'un voilier.

Le dispositif 1 comprend également des moyens de mise en tension 8 de la gaine de blocage 3 selon une trajectoire sensiblement rectiligne (L) permettant le blocage dudit élément tubulaire longiligne 2 dans le volume intérieur de la gaine de blocage 3 entre lesdits orifices d'admission 4 et de sortie 5. Lesdits moyens de mise en tension 8 sont désactivables manuellement pour le déblocage dudit élément tubulaire longiligne 2 et permettent alors son coulissement dans le volume intérieur de la gaine de blocage 3 et à travers lesdits orifices d'admission 4 et de sortie 5, avec l'aide de moyens de désactivation 9.

Dans ce premier exemple, la gaine de blocage 3 comporte des première 3a et seconde 3b extrémités ouvertes correspondant respectivement auxdits orifices d'admission 4 et de sortie 5.

Dans cet exemple précis, la gaine de blocage 3 est obtenue par le tressage de fils multi-filamentaires, de préférence à base de méta et/ou de para-aramide.

Les moyens de mise en tension 8 comprennent un câble de mise en tension élastique 10 apte à être solidarisé sur le support 7 selon une première extrémité 10a, et solidarisé selon sa seconde extrémité 10b à la seconde extrémité 3b de la gaine de blocage 3 par exemple à l'aide d'une épissure formant une boucle passant à travers les fils de la seconde extrémité 3b de la gaine de blocage 3.

La première extrémité 10a pourrait également être solidarisée à la seconde extrémité 3b par un simple noeud.

Dans une variante non représentée, la seconde extrémité 3b de la gaine de blocage 3 pourrait comprendre une épissure dans laquelle serait solidarisée l'épissure de la seconde extrémité 10b du câble 10.

Les moyens de désactivation 9 comprennent un câble de tirage 11 ayant des première 11a et seconde 11b extrémités, la seconde extrémité 11b du câble de tirage 11 est solidarisée en périphérie de l'orifice de sortie 5, notamment en aval dudit orifice de sortie 5 de la gaine de blocage 3.

Les moyens de fixation 6 de la gaine de blocage 3 sur le support 7 sont représentés sur la figure 2.

Les moyens de fixation 6 comprennent ainsi une base 12 sur laquelle est solidarisée une première pièce cylindrique creuse 13 ayant un diamètre interne (D) et une seconde pièce creuse 14 mobile de forme tronconique ayant une pente (alpha) inférieure à 10°, dans cet exemple précis égale à 3°. Ladite seconde pièce 14 a son plus grand diamètre externe (d) inférieur au diamètre interne (D) de la première pièce 13.

Lesdites première 13 et seconde 14 pièces sont agencées en sorte que la gaine de blocage 3 est apte à passer à l'intérieur de la première pièce 13 et à gainer la seconde pièce 14. Ainsi l'emboitement de la seconde pièce 14 gainée par la gaine de blocage 3 dans la première pièce 13 permet la solidarisation de la gaine de blocage 3 à la base 12.

La base 12 comprend dans cet exemple précis deux trous 12a et 12b à travers desquels peuvent être passés des moyens de fixation connus, du type vi, permettant la fixation de la base 12 sur le support.

Avantageusement, la première 13 et la seconde 14 pièces font office de moyens de guidage de l'élément tubulaire longiligne 2 dans le volume intérieur de la gaine de blocage 3. En fonctionnement, la figure 1 représente l'élément tubulaire longiligne 2 en position bloquée dans la gaine de blocage 3. Pour débloquer l'élément tubulaire longiligne 2, l'opérateur vient exercer une traction sur l'extrémité 11a du câble de tirage 11 en sorte de rapprocher l'orifice de sortie 3b de l'orifice d'admission 3a et ainsi libérer la tension exercée par la gaine de blocage 3 sur ledit élément tubulaire longiligne 2.

Si l'élément tubulaire longiligne 2 était au préalable mis en tension, il coulisse librement dans le volume intérieur de la gaine de blocage 3 jusqu'à ce que l'opérateur bloque de nouveau ledit élément tubulaire longiligne 2 en libérant la traction exercée sur l'extrémité 11a du câble de tirage 11.

Si l'élément tubulaire longiligne 2 n'était pas préalablement mis en tension, l'opérateur applique alors une traction sur une portion libre de l'élément tubulaire longiligne 2 en sorte d'en ajuster sa longueur, une fois la longueur de l'élément tubulaire longiligne bien déterminée, l'opérateur libère l'extrémité 11a du câble de tirage 11 pour supprimer la contre-tension exercée et de nouveau bloquer l'élément tubulaire longiligne 2 dans la gaine de blocage 3.

Sur la figure 1, la distance (D1) entre les orifices d'admission 3a et de sortie 3b de la gaine de blocage 3 est supérieure ou égale à quinze fois le diamètre externe (d1) de l'élément longiligne 2.

Le tableau 1 ci-dessous reprend les résultats des essais qui ont été réalisés sur des gaines de blocage et un élément longiligne à bloquer décrits en référence aux figures 1 et 2. Pour chaque essai, les gaines de blocage et l'élément longiligne de blocage sont neuves. Chaque valeur indiquée dans le tableau 1 est le résultat de la moyenne de trois essais. Les gaines de blocage ont la même structure tressée mais diffèrent de par la matière des fils multifilamentaires utilisées. Les gaines de blocage sont ainsi tressées sur un métier à tresser ayant vingt-quatre fuseaux supportant chacun deux fils multifilamentaires avec un titrage de 1500 dtex environ, le pas est de 46 mm. L'élément longiligne à bloquer comprend en âme trois fils multifilamentaires à trois torons de 1100 dtex chacun en polyéthylène téréphtalate et une couverture tressée avec sept fils multifilamentaires en polyéthylène téréphtalate de 1100 dtex chacun, le pas de tressage étant de 38 mm. L'élément longiligne à bloquer est inséré dans le volume intérieur de la gaine de blocage entre ses orifices d'admission et de sortie, et mis en tension à l'aide de l'élastique 10 en sorte d'atteindre 2 kg de charge. Le dispositif de déblocage et de blocage 1 selon l'invention ayant été préalablement fixé via les moyens de fixation 6 sur un support immobile, tel que le sol, l'extrémité de l'élément longiligne à bloquer en sortie de l'orifice de sortie de la gaine de blocage est alors disposée dans le mors d'un banc de traction, tel qu'un Instron, puis une traction est exercée sur cette extrémité à une vitesse de l'ordre de 100 mm/min, la force à partir de laquelle l'élément longiligne commence à glisser est reportée dans le tableau 1 ci-dessous comme étant la résistance au glissement (daN). Les diamètres externes des gaines de blocage et de l'élément longiligne à bloquer sont de l'ordre de 10 mm.

**Tableau 1**

| | **Résistance au glissement mesurée (daN)** | | | |
|---|---|---|---|---|
| **Distance entre les orifices d'admission et de sortie de la gaine de blocage (cm)** | **Gaine de blocage, aramide, en particulier en para-aramide** | **Gaine de blocage, PBO** | **Gaine de blocage, polyéthylène téréphtalate** | **Gaine de blocage, en polyamide 6-6** |
| 5 | 4 | 8 | 2 | 1 |
| 10 | 6 | 11 | 5 | 4 |
| 15 | 38 | 56 | 24 | 36 |
| 20 | 123 | 169 | 114 | 153 |
| 30 | 550 | 900 | 370 | 330 |
| 40 | 1500 | 2400 | 660 | 665 |
| 50 | 2560 | 2550 (casse de l'élément longiligne à bloquer) | 1190 | 1010 |

On remarque que lorsque la distance entre les orifices d'admission et de sortie est de dix fois le diamètre externe de l'élément longiligne comparativement à cinq fois le diamètre externe dudit élément longiligne, la résistance au glissement des gaines de blocage en aramide ou en PBO n'est augmentée que de 1,5 fois. De manière équivalente, la résistance au glissement des gaines de blocage en polyester et en polyamide n'est augmentée que d'environ deux fois alors qu'une distance entre les orifices d'admission et de sortie quinze fois supérieur au diamètre externe de l'élément longiligne, multiplie par sept la résistance au glissement des gaines à base d'aramide ou de PBO, voire multiplie par onze ou trente-six la résistance au glissement s'agissant d'une gaine de blocage en polyester ou en polyamide . De manière surprenante, au lieu de travailler sur la ténacité des fils et le nombre de fils à tresser pour améliorer la résistance au glissement apportée par la gaine de blocage, il est possible d'améliorer cette résistance sans modifier la structure de la gaine de blocage mais en augmentant la distance séparant les orifices d'admission et de sortie.

Ainsi, une distance entre les orifices de 40 cm, soit ici égale à quarante fois le diamètre externe de l'élément longiligne à bloquer, permet d'améliorer la résistance au glissement de quarante fois environ concernant une gaine à base d'aramide ou de PBO, et respectivement d'environ vingt-sept fois et dix-huit fois concernant une gaine à base de PET ou de PA 6-6 comparativement à une distance entre les orifices de 15 cm.

Le tableau 2 ci-dessous reprend les différentes valeurs de résistances au glissement obtenues dans les mêmes conditions que celles décrites au tableau 1, pour les mêmes gaines de blocage et éléments longilignes à bloquer. Les seules différences sont que la gaine de blocage présente une distance entre les orifices d'admission et de sortie de 40 cm et que la tension appliquée par l'élastique 10 varie.

**Tableau 2**

| | **Résistance au glissement mesurée (daN)** | | | |
|---|---|---|---|---|
| **Tension appliquée par l'élastique 10 (Kg) sur la gaine de blocage** | **Gaine de blocage, para-aramide** | **Gaine de blocage, PBO** | **Gaine de blocage, polyéthylène téréphtalate** | **Gaine de blocage, en polyamide 6-6** |
| 0,25 | 544 | 1120 | 70 | 50 |
| 0.5 | 697 | 1430 | 100 | 90 |
| 1 | 854 | 1780 | 270 | 235 |
| 1.5 | 1180 | 1932 | 450 | 400 |
| 2 | 1450 | 2056 | 660 | 665 |
| 2.5 | 1519 | 2233 | 885 | 849 |
| 3 | 1598 | 2460 | 950 | 982 |

Les résultats démontrent clairement que la tension appliquée par l'élastique sur la gaine de blocage, qui constitue dans cet exemple précis les moyens de mise en tension, impacte la résistance au glissement. Ainsi, une tension supérieure ou égale à 1,5 kg permet d'atteindre une résistance au glissement d'au moins 1 000 daN s'agissant d'une gaine de blocage à base d'aramide ou de PBO, et de plus de 400 daN s'agissant d'une gaine de blocage à base de PET ou de PA 6-6, lesdites gaines de blocage ayant un diamètre externe de 10 mm seulement. Ces valeurs sont particulièrement intéressantes s'agissant du remplacement des bloqueurs à came connus dans le domaine du nautisme comme limités à des tensions de blocage de 500 daN environ. En effet, au-delà de cette force, l'élément longiligne à bloquer glisse dans le bloqueur à came et finit par se déchirer.

Le tableau 3 ci-dessous illustre les résultats du comportement au « largage » observé sur les gaines de blocage et élément longiligne à bloquer décrits ci-dessus dans les tableaux 1 et 2, la structure des gaines et éléments longilignes testés est identique, seule la matière et la distance entre les orifices d'admission et de sortie de la gaine de blocage changent, cette dernière étant de cinquante fois le diamètre externe de l'élément longiligne à bloquer. La tension exercée par les moyens de mise en tension, en particulier par l'élastique 10 est de 2 kg. Une tension de 1000 daN est exercée sur l'extrémité libre de l'élément longiligne débouchant par l'orifice de sortie 3b de la gaine de blocage par un mors de serrage d'un banc de traction, par exemple du type Instron, puis l'élément longiligne bloqué est « largué » en désactivant les moyens de mise en tension en exerçant une contre-tension sur le câble de tirage 11, l'élément longiligne glisse alors dans la gaine de blocage. Cette opération est répétée dix fois. Une tension de « largage » est une tension habituelle dans le domaine du nautisme, en particulier pour les bateaux à voile de plus de dix mètres, notamment de compétition.

**Tableau 3**

| **Comportement gaine de blocage et élément longiligne à bloquer** | **Gaine de blocage en para-aramide** | **Gaine de blocage en PBO** | **Gaine de blocage en PET** | **Gaine de blocage en PA 6-6** |
|---|---|---|---|---|
| **Après un** « **largage** » | Gaine de blocage et élément longiligne à bloquer en bon état | Gaine de blocage et élément longiligne à bloquer en bon état | L'élément longiligne à bloquer et la gaine de blocage sont fusionnés sur une portion de leur longueur de plusieurs centimètres | Gaine de blocage et élément longiligne à bloquer en bon état |
| **Après dix** « **largages** » | Gaine de blocage et élément longiligne à bloquer en bon état, apparition de quelques fibres sur la gaine de blocage | Gaine de blocage et élément longiligne à bloquer en bon étant apparition de fibres sur la gaine de blocage | Test impossible car fusion au premier essai | La gaine de blocage est très dégradé en présence de zones de fusion ponctuelles entre la gaine de blocage et l'élément longiligne à bloquer. |

On remarque que les gaines de blocage en aramide et en PBO sont intactes même après dix largages et quand bien même l'élément longiligne à bloquer est en polyéthylène téréphtalate. Cette disposition est particulièrement avantageuse car dans le domaine du nautisme plus de la moitié des éléments longilignes utilisés est en polyéthylène téréphtalate.

Par ailleurs, il a été observé que les fibrilles qui se développent sur les gaines de blocage, en particulier dans leur volume intérieur, améliorent encore leur résistance au glissement. Une interprétation de ce phénomène, non exhaustive, serait que ces fibrilles augmentent le coefficient de friction entre la gaine de blocage et l'élément longiligne à bloquer.

On remarque par contre que les gaines de blocage en PET ou en PA ont fusionné avec l'élément longiligne à bloquer respectivement au bout de un et dix largages.

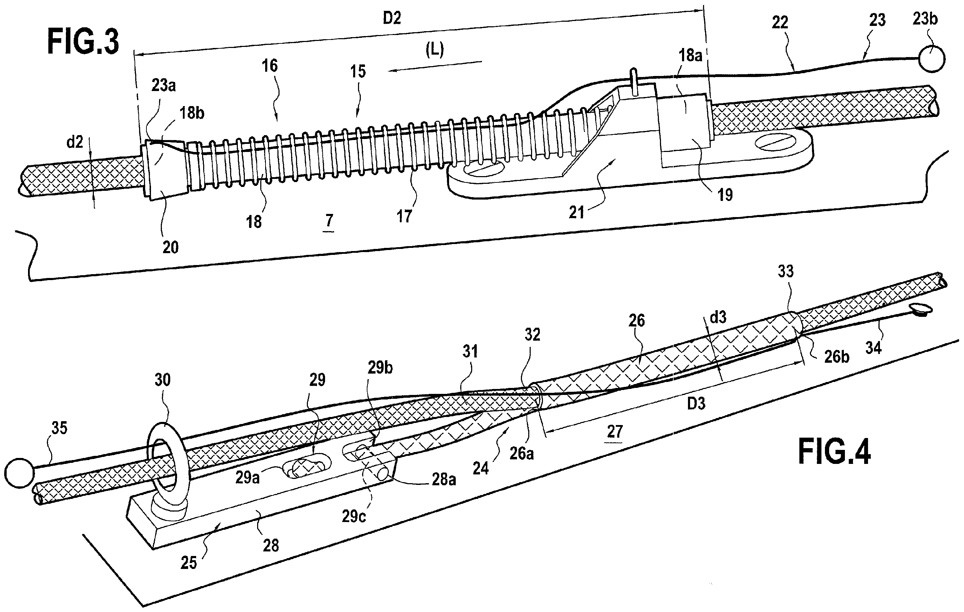

La figure 3 illustre un seconde exemple de dispositif de blocage et de déblocage 15 qui diffère du premier exemple de dispositif de blocage et de déblocage 1 en ce que les moyens de mise en tension 16 comprennent un ressort 17 monté sur la gaine de blocage 18, le ressort 17 ayant une rigidité déterminée en sorte de conférer à la gaine de blocage 18 une trajectoire sensiblement rectiligne (L).

Dans cet exemple de réalisation, les première 18a et seconde 18b extrémités de gaine de blocage 18 sont ouvertes et correspondent aux orifices d'admission 19 et de sortie 20.

Les moyens de fixation 21 de la première extrémité 18a de la gaine de blocage 18 sont identiques aux moyens de fixation 6 décrits à la figure 2.

Les moyens de désactivation 22 sont identiques aux moyens de désactivation 9 représentés à la figure 1 en ce qu'ils comprennent un câble de tirage 23 dont l'extrémité 23a est fixée au niveau de l'orifice de sortie 20 tandis que l'extrémité 23b est libre pour être manipulée par un opérateur.

Le troisième exemple de dispositif de blocage et déblocage 24 représenté à la figure 4 diffère des dispositifs 1 et 15 en ce que les moyens de fixation 25 de la gaine de blocage 26 sur un support 27 comprennent une plaque 28 comportant des moyens d'attache 29 se présentant sous la forme de deux évidements 29a et 29b. L'évidement 29a permet le passage de moyens de fixation connus, tels que des vis, pour la fixation de la plaque 25 au support 27. L'évidement 29b comporte deux ouvertures 28a en vis-à-vis permettant le passage d'une goupille 29c à travers la première extrémité 26a comportant une épissure. L'évidement 29b a une forme en U ouvert orienté vers l'avant de la plaque 29 en sorte de guider la gaine de blocage 26.

Les moyens de fixation 25 comprennent également un anneau 30 monté sur la plaque 28 et faisant office de moyens de guidage de l'élément tubulaire longiligne 31.

Dans cet exemple de réalisation, l'orifice d'admission 32 est différent de de la première extrémité 26a de la gaine de blocage 26. La première extrémité 26a de la gaine de blocage 26 peut être ouverte ou fermée, de préférence elle est fermée par une épissure. L'orifice d'admission 32 débouche ainsi transversalement de la gaine de blocage 26. L'orifice de sortie 33 de l'élément tubulaire longiligne 31 de la gaine de blocage 26 correspond à la seconde extrémité ouverte 26b de la gaine de blocage 26.

Dans cet exemple, les moyens de mise en tension 34 sont identiques aux moyens de mise en tension 8 décrits à la figure 1, et les moyens de désactivation 35 sont identiques aux moyens de désactivation 9 et 22 représentés aux figures 1 et 3.

Sur les figures 3 et 4 la distance (D2,D3) entre les orifices d'admission (18a, 26a) et de sortie (18b, 26b) des gaines de blocage (18,26) est supérieure ou égale à quinze fois le diamètre externe (d2,d3) des éléments longilignes à bloquer.

## Revendications

1. Dispositif de blocage (1,15,24) et de déblocage d'un élément tubulaire longiligne (2,31) comprenant :
a. Un élément tubulaire longiligne ;
b. Une gaine de blocage (3,18,26), tubulaire, ayant un volume intérieur et des première (3a,18a,26a) et seconde (3b,18b,26b) extrémités, tressée ou tricotée, comportant un orifice d'admission (4,19,32) dans son volume intérieur pour l'admission dudit élément tubulaire longiligne (2,31) et un orifice de sortie (5,20,33) de son volume intérieur pour la sortie dudit élément tubulaire longiligne (2,31) ;
c. Des moyens de fixation (6,21,25) de ladite gaine de blocage (3,18,26) sur un support (7,27) ;
d. Des moyens de mise en tension (8,16,34) de ladite gaine de blocage (3,18,26) selon une trajectoire sensiblement rectiligne (L) permettant le blocage dudit élément tubulaire longiligne (2,31) dans le volume intérieur de ladite gaine de blocage (3,18,26) entre lesdits orifices d'admission (4,19,32) et de sortie (5,20,33), lesdits moyens de mise en tension (8,16,34) étant désactivables manuellement pour le déblocage dudit élément tubulaire longiligne (2,31) permettent son coulissement dans le volume intérieur de la gaine de blocage (3,18,26) et à travers lesdits orifices d'admission (4,19,32) et de sortie (5,20,33), et/ou avec l'aide de moyens de désactivation (9,22,35) **caractérisé en ce que** la distance séparant les orifices d'admission et de sortie de ladite gaine de blocage est supérieure ou égale à 15 fois le diamètre externe dudit élément longiligne à bloquer.

2. Dispositif (1,15,24) selon la revendication 1, **caractérisé en ce que** la distance séparant les orifices d'admission et de sortie de la gaine de blocage est supérieure ou égale à 20 fois, de préférence supérieure ou égale à 40 fois, le diamètre externe dudit élément longiligne à bloquer.

3. Dispositif selon l'une ou l'autre des revendications 1 et 2, **caractérisé en ce que** la gaine de blocage (3,18) comporte des première (3a,18a) et seconde (3b,18b) extrémités ouvertes, de préférence la première (3a,18a) extrémité ouverte correspond audit orifice d'admission (4,19), éventuellement la seconde (3b,18b) extrémité ouverte correspond audit orifice de sortie (5,20).

4. Dispositif (24) selon l'une ou l'autre des revendications 1 et 2, **caractérisé en ce que** l'orifice d'admission (32) ou l'orifice de sortie débouche transversalement de la gaine de blocage (26).

5. Dispositif (1,15,24) selon l'une quelconque des revendications 1 à 4, **caractérisé en ce que** la gaine de blocage (3,18,26) comprend des fils multifilamentaires et/ou monofilamentaires, de préférence choisis parmi les matériaux suivants seul ou en combinaison : polytétrafluoroéthylène (PTFE), polybenzobisoxazole (PBO), aramide : méta-aramide et/ou para-aramide, et éventuellement polyamide 6-6 ou 4-6, polyéthylène à très haut poids moléculaire, polypropylène (PP), polyéthylène téréphtalate (PET) polyetherether ketone (PEEK), polyether ketone ketone (PEK), polyacétals, notamment le polyoxyméthylène (POM), de préférence choisi seul ou en combinaison parmi le polybenzobisoxazole (PBO) et l'aramide : méta-aramide et/ou para-aramide,

6. Dispositif (15) selon l'une quelconque des revendications 1 à 5, **caractérisé en ce que** les moyens de mise en tension (16) comprennent un ressort (17) monté sur la gaine de blocage (18), ledit ressort (17) ayant une rigidité déterminée en sorte de conférer à ladite gaine de blocage (18) une trajectoire sensiblement rectiligne (L).

7. Dispositif (1,24) selon l'une quelconque des revendications 1 à 5, **caractérisé en ce que** les moyens de mise en tension (8,34) comprennent un câble de mise en tension élastique (8) apte à être solidarisé sur ledit support (7,27) et solidarisé à la seconde extrémité (3b,26b) de la gaine de blocage (3,26), de préférence la seconde extrémité (3b,26b) de la gaine de blocage (3,26) comporte une épissure formant une boucle d'attache dans laquelle est solidarisée ledit câble de mise en tension (8).

8. Dispositif selon l'une quelconque des revendications 1 à 5, **caractérisé en ce que** les moyens de mise en tension comprennent un jonc de renfort composite, apte à être courbé, ayant des première et seconde extrémités solidarisées respectivement aux première et seconde extrémités de la gaine de blocage.

9. Dispositif selon l'une quelconque des revendications 1 à 5, **caractérisé en ce que** les moyens de mise en en tension comprennent au moins trois fils monofilamentaires, de préférence ayant un diamètre externe supérieure ou égale à 1 mm, disposés dans la structure tressée de la gaine de blocage.

10. Dispositif selon la revendication 9, **caractérisé en ce que** les fils monofilamentaires sont disposés dans la structure de la gaine de blocage en sorte d'être équidistants, parallèles entre-eux et à la direction longitudinale (l) de ladite gaine.

11. Dispositif selon l'une ou l'autre des revendications 9 et 10, **caractérisé en ce que** les fils monofilamentaires sont choisis parmi les polymères suivants, seul ou en combinaison : polyéther éther kétone (PEEK), polyether ketone ketone (PEK), polyacétals notamment le polyoxyméthylène (POM), copolymère à bloc polyéther-ester, copolymère à bloc polyéther-amide (PEBA),.

12. Dispositif selon l'une quelconque des revendications 1 à 11, **caractérisé en ce que** les moyens de mise en tension exercent une tension au moins de 1,5 Kg, de préférence au moins de 2 Kg, sur la gaine de blocage.

13. Dispositif selon l'une quelconque des revendications 1 à 12, **caractérisé en ce que** la gaine de blocage comprend des fils multifilamentaires tressés selon le mode un pris pour un ou deux laissé(s) en sorte de former des faces interne et externe en reliefs.

14. Dispositif (1,15,24) selon l'une quelconque des revendications 1 à 12, **caractérisé en ce que** les moyens de désactivation (9,22,35) comprennent un câble de tirage (11,23) ayant des première (11a,23a) et seconde (11b,23b) extrémités, la seconde extrémité (11b,23b) dudit câble de tirage (11,23)est solidarisée en périphérie de l'orifice de sortie (5,20) à la gaine de blocage (3,18), en sorte que par l'application d'une traction, notamment manuelle, sur une portion dudit câble de tirage (11,23) vers ledit orifice d'admission (4,19), les orifices de sortie (5,20) et d'admission (4,19) sont rapprochés permettant le déblocage de l'élément tubulaire longiligne (2,31) et son coulissement à travers lesdits orifices d'admission (4,19) et de sortie (5,20) lorsqu'une traction est exercée sur ledit élément tubulaire longiligne (2,31).

15. Dispositif (24) selon la revendication 1 et les revendications 4 à 14, **caractérisé en ce que** l'orifice d'admission (32) débouche transversalement de la gaine de blocage (26), éventuellement la seconde extrémité (26b) de la gaine de blocage (26) est ouverte et correspond à l'orifice de sortie (33), et **en ce que** les moyens de fixation (25) comprennent une plaque (28) comportant des moyens d'attache (29,29a,29b) de la première extrémité (26a) de la gaine de blocage (26), et des moyens de guidage (30) dudit élément tubulaire longiligne (31), notamment un anneau (30) monté sur ladite plaque (28).

16. Dispositif selon l'une quelconque des revendications 1 à 15, **caractérisé en ce qu'**il comprend un élément longiligne à bloquer, dont la surface externe comprend des fils multifilamentaires tressés selon un mode un pris et un ou deux laissés.

17. Kit comprenant un élément tubulaire longiligne et un dispositif de blocage et de déblocage dudit élément tubulaire longiligne, ledit dispositif comprenant
a. Une gaine de blocage (3,18,26), tubulaire, ayant un volume intérieur et des première (3a,18a,26a) et seconde (3b,18b,26b) extrémités, tressée ou tricotée, comportant un orifice d'admission (4,19,32) dans son volume intérieur pour l'admission dudit élément tubulaire longiligne (2,31) et un orifice de sortie (5,20,33) de son volume intérieur pour la sortie dudit élément tubulaire longiligne (2,31) ;
b. Des moyens de fixation (6,21,25) de ladite gaine de blocage (3,18,26) sur un support (7,27) ;
c. Des moyens de mise en tension (8,16,34) de ladite gaine de blocage (3,18,26) selon une trajectoire sensiblement rectiligne (L) permettant le blocage dudit élément tubulaire longiligne (2,31) dans le volume intérieur de ladite gaine de blocage (3,18,26) entre lesdits orifices d'admission (4,19,32) et de sortie (5,20,33), lesdits moyens de mise en tension (8,16,34) étant désactivables manuellement pour le déblocage dudit élément tubulaire longiligne (2,31) permettent son coulissement dans le volume intérieur de la gaine de blocage (3,18,26) et à travers lesdits orifices d'admission (4,19,32) et de sortie (5,20,33), et/ou avec l'aide de moyens de désactivation (9,22,35) **caractérisé en ce que** la distance séparant les orifices d'admission et de sortie de ladite gaine de blocage est supérieure ou égale à 15 fois le diamètre externe dudit élément longiligne à bloquer.

## Patentansprüche

1. Vorrichtung zum Blockieren (1, 15, 24) und Freigeben eines länglichen röhrenförmigen Elements (2, 31), umfassend:
a. ein längliches röhrenförmiges Element,
b. eine röhrenförmige Blockierhülse (3, 18, 26), die ein inneres Volumen und ein erstes (3a, 18a, 26a) und ein zweites (3b, 18b, 26b) Ende aufweist, die geflochten oder gestrickt ist, die eine Einlassöffnung (4, 19, 32) in ihr Innenvolumen für das Einlassen des länglichen röhrenförmigen Elements (2, 31) und eine Auslassöffnung (5, 20, 33) aus ihrem Innenvolumen für das Auslassen des länglichen röhrenförmigen Elements (2, 31) aufweist,
c. Befestigungsmittel (6, 21, 25) der Blockierhülse (3, 18, 26) auf einem Träger (7, 27),
d. Mittel zum Spannen (8, 16, 34) der Blockierhülse (3, 18, 26) entlang einer im Wesentlichen geradlinigen Bahn (L), die das Blockieren des länglichen röhrenförmigen Elements (2, 31) im Innenvolumen der Blockierhülse (3, 18, 26) zwischen der Einlassöffnung (4, 19, 32) und der Auslassöffnung (5, 20, 33) ermöglichen, wobei die Mittel zum Spannen (8, 16, 34), die zum Freigeben des länglichen röhrenförmigen Elements (2, 31) manuell deaktivierbar sind, sein Gleiten in dem Innenvolumen der Blockierhülse (3, 18, 26) und durch die Einlassöffnung (4, 19, 32) und die Auslassöffnung (5, 20, 33) und/oder mit Hilfe von Deaktivierungsmitteln (9, 22, 35) ermöglichen, **dadurch gekennzeichnet, dass** der Abstand zwischen der Einlassöffnung und der Auslassöffnung der Blockierhülse größer oder gleich dem 15-fachen des Außendurchmessers des zu blockierenden länglichen Elements ist.

2. Vorrichtung (1, 15, 24) gemäß Anspruch 1, **dadurch gekennzeichnet, dass** der Abstand zwischen der Einlassöffnung und der Auslassöffnung der Blockierhülse größer oder gleich dem 20-fachen, vorzugsweise größer oder gleich dem 40-fachen des Außendurchmessers des zu blockierenden länglichen Elements ist.

3. Vorrichtung gemäß dem einen oder dem anderen der Ansprüche 1 und 2, **dadurch gekennzeichnet, dass** die Blockierhülse (3, 18) ein erstes (3a, 18a) und ein zweites (3b, 18b) offenes Ende aufweist, das erste (3a, 18a) offene Ende vorzugsweise der Einlassöffnung (4, 19) entspricht, eventuell das zweite (3b, 18b) offene Ende der Auslassöffnung (5, 20) entspricht.

4. Vorrichtung (24) gemäß einem der Ansprüche 1 und 2, **dadurch gekennzeichnet, dass** die Einlassöffnung (32) oder die Auslassöffnung quer zu der Blockierhülse (26) mündet.

5. Vorrichtung (1, 15, 24) gemäß einem der Ansprüche 1 bis 4, **dadurch gekennzeichnet, dass** die Blockierhülse (3, 18, 26) Multifilamentfäden und/oder Monofilamentfäden umfasst, die vorzugsweise aus den folgenden Materialien allein oder in Kombination ausgewählt sind: Polytetrafluorethylen (PTFE), Polybenzobisoxazol (PBO), Aramid: Meta-Aramid und/oder Para-Aramid, und eventuell Polyamid 6.6 oder 4.6, Polyethylen mit sehr hohem Molekulargewicht, Polypropylen (PP), Polyethylenterephthalat (PET), Polyetheretherketon (PEEK), Polyetherketonketon (PEK), Polyacetale, insbesondere Polyoxymethylen (POM), vorzugsweise allein oder in Kombination ausgewählt aus Polybenzobisoxazol (PBO) und Aramid: Meta-Aramid und/oder Para-Aramid.

6. Vorrichtung (15) gemäß einem der Ansprüche 1 bis 5, **dadurch gekennzeichnet, dass** die Mittel zum Spannen (16) eine Feder (17) aufweisen, die auf der Blockierhülse (18) befestigt ist, wobei die Feder (17) eine Steifigkeit aufweist, die derart bestimmt ist, dass der Blockierhülse (18) eine im Wesentlichen geradlinige Bahn (L) verliehen wird.

7. Vorrichtung (1, 24) gemäß einem der Ansprüche 1 bis 5, **dadurch gekennzeichnet, dass** die Mittel zum Spannen (8, 34) ein Kabel zum elastischen Spannen (8) aufweisen, das geeignet ist, auf dem Träger (7, 27) fest verbunden zu werden und an dem zweiten Ende (3b, 26b) der Blockierhülse (3, 26) fest verbundenen zu werden, vorzugsweise das zweite Ende (3b, 26b) der Blockierhülse (3, 26) einen Spleiß aufweist, der eine Befestigungsschlaufe bildet, in der das Kabel zum Spannen (8) fest verbunden ist.

8. Vorrichtung gemäß einem der Ansprüche 1 bis 5, **dadurch gekennzeichnet, dass** die Mittel zum Spannen einen Verbundverstärkungsring aufweisen, der geeignet ist, gebogen zu werden, der ein erstes und ein zweites Ende aufweist, die jeweils mit dem ersten und zweiten Ende der Blockierhülse fest verbunden sind.

9. Vorrichtung gemäß einem der Ansprüche 1 bis 5, **dadurch gekennzeichnet, dass** die Mittel zum Spannen mindestens drei Monofilamentfäden aufweisen, die vorzugsweise einen Außendurchmesser aufweisen, der größer oder gleich 1 mm ist, die in der geflochtenen Struktur der Blockierhülse angeordnet sind.

10. Vorrichtung gemäß Anspruch 9, **dadurch gekennzeichnet, dass** die Monofilamentfäden in der Struktur der Blockierhülse derart angeordnet sind, um äquidistant, parallel zueinander und in der Längsrichtung (1) der Hülse zu sein.

11. Vorrichtung gemäß einem der Ansprüche 9 und 10, **dadurch gekennzeichnet, dass** die Monofilamentfäden aus den folgenden Polymeren allein oder in Kombination ausgewählt sind: Polyetheretherketon (PEEK), Polyetherketonketon (PEK), Polyacetalen, insbesondere Polyoxymethylen (POM), Polyetheresterblockcopolymer, Polyetherblockamid-Copolymer (PEBA).

12. Vorrichtung gemäß einem der Ansprüche 1 bis 11, **dadurch gekennzeichnet, dass** die Mittel zum Spannen eine Spannung von mindestens 1,5 kg, vorzugsweise von mindestens 2 kg, auf die Blockierhülse ausüben.

13. Vorrichtung gemäß einem der Ansprüche 1 bis 12, **dadurch gekennzeichnet, dass** die Blockierhülse Multifilamentfäden umfasst, die nach der Art, bei der ein Faden genommen und ein oder zwei Fäden ausgelassen werden, derart geflochten sind, um eine Innen- und Außenseite in Reliefs zu bilden.

14. Vorrichtung (1, 15, 24) gemäß einem der Ansprüche 1 bis 12, **dadurch gekennzeichnet, dass** die Deaktivierungsmittel (9, 22, 35) ein Zugkabel (11, 23) aufweisen, das ein erstes (11a, 23a) und ein zweites Ende (11b, 23b) aufweist, wobei das zweite Ende (11b, 23b) des Zugkabels (11, 23) am Umfang der Auslassöffnung (5, 20) mit der Blockierhülse (3, 18) derart fest verbunden ist, dass durch Ausüben einer insbesondere manuellen Zugkraft auf einen Abschnitt des Zugkabels (11, 23) in Richtung der Einlassöffnung (4, 19) die Auslassöffnung (5, 20) und die Einlassöffnung (4, 19) angenähert werden, wodurch das Freigeben des länglichen röhrenförmigen Elements (2, 31) und sein Gleiten durch die Einlassöffnung (4, 19) und die Auslassöffnung (5, 20) ermöglicht wird, wenn ein Zug auf das längliche röhrenförmige Element (2, 31) ausgeübt wird.

15. Vorrichtung (24) gemäß Anspruch 1 und den Ansprüchen 4 bis 14, **dadurch gekennzeichnet, dass** die Einlassöffnung (32) quer zu der Blockierhülse (26) mündet, eventuell das zweite Ende (26b) der Blockierhülse (26) offen ist und der Auslassöffnung (33) entspricht, und dadurch, dass die Befestigungsmittel (25) eine Platte (28), die Anbringungsmittel (29, 29a, 29b) des ersten Endes (26a) der Blockierhülse (26) aufweist, und Führungsmittel (30) des länglichen röhrenförmigen Elements (31), insbesondere einen Ring (30), der auf der Platte (28) befestigt ist, aufweisen.

16. Vorrichtung gemäß einem der Ansprüche 1 bis 15, **dadurch gekennzeichnet, dass** sie ein zu blockierendes längliches Element aufweist, dessen Außenoberfläche Multifilamentfäden umfasst, die nach einer Art, bei der ein Faden genommen und ein oder zwei Fäden ausgelassen werden, geflochten sind.

17. Set, umfassend ein längliches röhrenförmiges Element und eine Vorrichtung zum Blockieren und Freigeben des länglichen röhrenförmigen Elements, wobei die Vorrichtung aufweist
a. eine röhrenförmige Blockierhülse (3, 18, 26), die ein Innenvolumen und ein erstes (3a, 18a, 26a) und ein zweites (3b, 18b, 26b) Ende aufweist, die geflochten oder gestrickt ist, die eine Einlassöffnung (4, 19, 32) in ihr Innenvolumen für das Einlassen des länglichen röhrenförmigen Elements (2, 31) und eine Auslassöffnung (5, 20, 33) aus ihrem Innenvolumen für das Auslassen des länglichen röhrenförmigen Elements (2, 31) aufweist,
b. Befestigungsmittel (6, 21, 25) der Blockierhülse (3, 18, 26) auf einem Träger (7, 27),
c. Mittel zum Spannen (8, 16, 34) der Blockierhülse (3, 18, 26) entlang einer im Wesentlichen geradlinigen Bahn (L), die das Blockieren des länglichen röhrenförmigen Elements (2, 31) im Innenvolumen der Blockierhülse (3, 18, 26) zwischen der Einlassöffnung (4, 19, 32) und der Auslassöffnung (5, 20, 33) ermöglichen, wobei die Mittel zum Spannen (8, 16, 34), die zum Freigeben des länglichen röhrenförmigen Elements (2, 31) manuell deaktivierbar sind, sein Gleiten in dem Innenvolumen der Blockierhülse (3, 18, 26) und durch die Einlassöffnung (4, 19, 32) und die Auslassöffnung (5, 20, 33) und/oder mit Hilfe von Deaktivierungsmitteln (9, 22, 35) ermöglichen, **dadurch gekennzeichnet, dass** der Abstand zwischen der Einlassöffnung und der Auslassöffnung der Blockierhülse größer oder gleich dem 15-fachen des Außendurchmessers des zu blockierenden länglichen Elements ist.

## Claims

1. A device (1, 15, 24) for locking and unlocking an elongate tubular element (2, 31), the device comprising:
a. An elongate tubular element;
b. A braided or knitted tubular locking sleeve (3, 18, 26) that has an internal volume and a first end (3a, 18a, 26a) and a second end (3b, 18b, 26b), and that has an inlet orifice (4, 19, 32) for allowing said elongate tubular element (2, 31) into its internal volume, and an outlet orifice (5, 20, 33) for allowing said elongate tubular element (2, 31) out of its internal volume;
c. Fastener means (6, 21, 25) for fastening said locking sleeve (3, 18, 26) to a support (7, 27);
d. Tensioner means (8, 16, 34) for tensioning said locking sleeve (3, 18, 26) along a substantially rectilinear path (L) making it possible to lock said elongate tubular element (2, 31) in the internal volume of said locking sleeve (3, 18, 26) between said inlet orifice (4, 19, 32) and said outlet orifice (5, 20, 33), said tensioner means (8, 16, 34) being deactivatable manually, and/or by using deactivation means (9, 22, 35), for unlocking said elongate tubular element (2, 31) to enable it to slide inside the internal volume of the locking sleeve (3, 18, 26) and through said inlet orifice (4, 19, 32) and said outlet orifice (5, 20, 33);
said device being **characterized in that** the distance between the inlet and outlet orifices of said locking sleeve is greater than or equal to 15 times the outside diameter of said elongate element to be locked.

2. A device (1, 15, 24) according to claim 1, **characterized in that** the distance between the inlet and outlet orifices of said locking sleeve is greater than or equal to twenty times, and preferably greater than or equal to forty times, the outside diameter of said elongate element to be locked.

3. A device according to claim 1 or claim 2, **characterized in that** the locking sleeve (3, 18) has a first end (3a, 18a) and a second end (3b, 18b) that are open, the first open end (3a, 18a) preferably corresponding to said inlet orifice (4, 19), and the second open end (3b, 18b) optionally corresponding to said outlet orifice (5, 20).

4. A device (24) according to claim 1 or claim 2, **characterized in that** the inlet orifice (32) or the outlet orifice opens out transversely from the locking sleeve (26).

5. A device (1, 15, 24) according to any one of claims 1 to 4, **characterized in that** the locking sleeve (3, 18, 26) comprises multi-filament yarns and/or mono-filament yarns, preferably selected from among the following materials used on their own or in combination: polytetrafluoroethylene (PTFE); polybenzobisoxazole (PBO); aramid: meta-aramid and/or para-aramid; and optionally: 6-6 or 4-6 polyamide (PA); ultra-high molecular weight polyethylene (UHMWPE); polypropylene (PP); polyethylene terephthalate (PET); polyether ether ketone (PEEK); polyether ketone ketone (PEKK); polyacetals; in particular polyoxymethylene (POM); preferably selected on their own or in combination from among polybenzobisoxazole (PBO) and aramid: meta-aramid and/or para-aramid.

6. A device (15) according to any one of claims 1 to 5, **characterized in that** the tensioner means (16) comprise a spring (17) mounted on the locking sleeve (18), said spring (17) having stiffness determined so as to impart a substantially rectilinear path (L) to said locking sleeve (18).

7. A device (1, 24) according to any one of claims 1 to 5, **characterized in that** the tensioner means (8, 34) comprise an elastic tensioning cable (8) suitable for being secured to said support (7, 27), and secured to the second end (3b, 26b) of the locking sleeve (3, 26), the second end (3b, 26b) of the locking sleeve (3, 26) preferably having a backsplice forming an attachment loop to which said tensioning cable (8) is secured.

8. A device according to any one of claims 1 to 5, **characterized in that** the tensioner means comprise a composite reinforcing rod, suitable for being curved, having first and second ends that are secured to respective ones of the first and second ends of the locking sleeve.

9. A device according to any one of claims 1 to 5, **characterized in that** the tensioner means comprise at least three mono-filament yarns preferably having an outside diameter greater than or equal to 1 mm, and disposed in the braided structure of the locking sleeve.

10. A device according to claim 9, **characterized in that** the mono-filament yarns are disposed in the structure of the locking sleeve so as to be equidistant, mutually parallel, and parallel to the longitudinal direction (ℓ) of said sleeve.

11. A device according to claim 9 or claim 10, **characterized in that** the mono-filament yarns are selected from among the following polymers, used on their own or in combination: polyether ether ketone (PEEK); polyether ketone ketone (PEKK); polyacetals, in particular polyoxymethylene (POM); polyether-ester block copolymer; and polyether block amide (PEBA) copolymer.

12. A device according to any one of claims 1 to 11, **characterized in that** the tensioner means exert tension of at least 1.5 kg, and preferably at least 2 kg, on the locking sleeve.

13. A device according to any one of claims 1 to 12, **characterized in that** the locking sleeve comprises multi-filament yarns braided in "one up, one down or two down" mode so as to form inside and outside faces in relief.

14. A device (1, 15, 24) according to any one of claims 1 to 12, **characterized in that** the deactivation means (9, 22, 35) comprise a pull cable (11, 23) having a first end (11a, 23a) and a second end (11b, 23b), the second end (11b, 23b) of said pull cable (11, 23) is secured at the periphery of the outlet orifice (5, 20) to the locking sleeve (3, 18), so that, by applying traction, in particular manually, to a portion of said pull cable (11, 23) towards said inlet orifice (4, 19), the outlet orifice (5, 20) and the outlet orifice (4, 19) are moved closer together, enabling the elongate tubular element (2, 31) to be unlocked, and enabling it to slide through said inlet orifice (4, 19) and said outlet orifice (5, 20) when traction is exerted on said elongate tubular element (2, 31).

15. A device (24) according to claim 1 and claims 4 to 14, **characterized in that** the inlet orifice (32) opens out transversely from the locking sleeve (26), the second end (26b) of the locking sleeve (26) optionally being open and corresponding to the outlet orifice (33), and **in that** the fastener means (25) comprise a plate (28), provided with attachment means (29, 29a, 29b) for attaching the first end (26a) of the locking sleeve (26), and with guide means (30) for guiding said elongate tubular element (31), in particular a ring (30) mounted on said plate (28).

16. A device according to any one of claims 1 to 15, **characterized in that** it includes an elongate element to be locked, the outside surface of which element includes multi-filament yarns braided in a "one up, one down or two down" mode.

17. Kit comprising an elongate tubular element and a device for locking and unlocking the said elongate tubular element; the said device comprising:
a. A braided or knitted tubular locking sleeve (3, 18, 26) that has an internal volume and a first end (3a, 18a, 26a) and a second end (3b, 18b, 26b), and that has an inlet orifice (4, 19, 32) for allowing said elongate tubular element (2, 31) into its internal volume, and an outlet orifice (5, 20, 33) for allowing said elongate tubular element (2, 31) out of its internal volume;
b. Fastener means (6, 21, 25) for fastening said locking sleeve (3, 18, 26) to a support (7, 27);
c. Tensioner means (8, 16, 34) for tensioning said locking sleeve (3, 18, 26) along a substantially rectilinear path (L) making it possible to lock said elongate tubular element (2, 31) in the internal volume of said locking sleeve (3, 18, 26) between said inlet orifice (4, 19, 32) and said outlet orifice (5, 20, 33), said tensioner means (8, 16, 34) being deactivatable manually, and/or by using deactivation means (9, 22, 35) for unlocking said elongate tubular element (2, 31) to enable it to slide inside the internal volume of the locking sleeve (3, 18, 26) and through said inlet orifice (4, 19, 32) and said outlet orifice (5, 20, 33); **characterized in that** the distance between the inlet and outlet orifices of said locking sleeve is greater than or equal to 15 times the outside diameter of said elongate element to be locked.
